# EUROPEAN PATENT APPLICATION

(11) **EP 4 661 454 A1**
(43) Date of publication of application: **10.12.2025**
(21) Application number: 24179725.7
(22) Date of filing: 03.06.2024
(51) Int. Cl.: H04W 8/20

(54) **METHOD AND DEVICES FOR PROFILE AUTOPROVISIONING IN MOBILE NETWORKS**

(71) Applicant: Giesecke+Devrient Mobile Security Germany GmbH, 81677 München (DE)
(72) Inventor: Larsson, Thomas, 81677 Munich (DE)
(74) Representative: LKGLOBAL Lorenz & Kopf Patentanwalt Attorney at Law PartG mbB

(57) **Abstract**

The present invention relates to a method for a method for providing profile data, such as an eSIM profile, comprising the steps of receiving, by a server device, activation data relating to an activation request of a user device; sending, by the server device, a notification to a network management device comprising profile data relating to the activation data; generating, by the network management device, a profile entry according to the received profile data. The invention further relates to a server device and a network management device for providing profile data to a user device.

## Description

The present invention pertains to the field of telecommunications and network management. Specifically, the present methods and devices relate to efficiently transferring profile data, including eSIM profile data, from server devices such as an eSIM repository to network management devices, such as an OTA server.

### BACKGROUND OF THE INVENTION

User profiles, specifically eSIM profiles, comprise vital information such as network settings, access permissions, and personalized configurations. Efficient management of corresponding profile data is essential with an increasing number of active SIM profiles and consequently increasing network traffic to maintain devices.

Generally, user profiles are stored and managed within network management systems. However, the need arises for more dynamic and responsive methods to transfer and manage user profiles. eSIM technology further accentuates this requirement, as it allows users to easily switch carriers and adapt their profiles.

Existing solutions often involve manual interventions, complex procedures, or have limited scalability. Therefore, there is a demand for an improved method that seamlessly transfers profile data while ensuring data integrity, security, and synchronicity between network infrastructure devices.

When activating an eSIM profile on a user device, the initial setup may involve establishing a connection between the device and the Subscription Manager Data Preparation Plus (SM-DP+) server. The SM-DP+ address can be a digital equivalent of a SIM card's home address. When activating an eSIM profile, the user device can user the SM-DP+ address to fetch corresponding credentials. The SM-DP+ can provide a download location for the eSIM profile when the user device identity and authenticity are verified by the SM-DP+. With the eSIM profile, the user device can provide a an eSIM service by activating the profile and associating it with the devices identity, e.g., an International Mobile Subscriber Identity - IMSI).

A network management device, e.g. an OTA server, can detect changes (e.g., tariff plan update, roaming configuration) that may require an eSIM profile update. Thereto, an OTA notification can be generated, containing information about the update. The OTA server can prepare an updated eSIM profile package which may include modified profile data and relevant metadata. The OTA server can send the update package to the user device. The user device can receive the package securely over an OTA channel. The user device validates the package integrity and authenticity and subsequently installs the updated eSIM profile. The newly installed profile can be activated, preferably by an eSIM module, e.g., eUICC, such that the user device can seamlessly transition to an updated configuration.

In the field of eSIM data provision, there exists a need for efficiently and reliably providing a user device with an eSIM profile, preferably an up-to-date eSIM profile. The present invention addresses this problem by overcoming shortcomings of known eSIM profile data provisioning and database consistency in mobile network infrastructure.

### SUMMARY OF THE INVENTION

The present invention relates to a communication strategy between infrastructure devices such as an eSIM repository server and a management server, e.g., an OTA server. Herein notifying the management server is part of the activation process of an eSIM profile and can be achieved prior to providing an eSIM profile to the user device. The setup process can relate to an initial setup of the device or a setup after a device reset, e.g., a factory reset.

According to a first aspect, the present invention relates to a method for providing profile data, such as an eSIM profile. The method comprises receiving, preferably by a server device, activation data relating to an activation request of a user device, preferably from the user device. Further, the method can comprise sending, preferably by the server device, a notification to a network management device comprising profile data relating to the activation data. Sending of the notification can be performed in response to receiving the activation data. Additionally, the method can comprise generating, preferably by the network management device, a profile entry according to the received profile data.

The present invention achieves an increase in operational efficiency due to reduced downtime and streamlined network management processes. Specifically, the risk of database inconsistencies between the server device and the network management device can be reduced. For example, the server device can be provisioned with initial profile data only. When an activation request is received by the server device, the server device may provide corresponding profile data to the network management device. Thereto, the network management device may not need to be pre-provisioned with profile data, as it can receive all necessary profile data from the server device in the context of the activation process. Double provisioning of profile data to the server device and the network management device can be avoided. Additionally, the network management device can be aware of upcoming communication with a user device in the activation process or a user device that has recently completed an activation process, such that the uncertainty of an update process between user device and network management device can be reduced. Network traffic can be also reduced as the user device is more likely to receive data from the network management device upon the initial communication between the user device and the network management device.

Receiving activation data can relate to an activation process of a user device with the server device. Preferably, the user device contacts the server device to activate a SIM profile to establish a connection with a mobile network. The user device comprises the activation data necessary to initiate the activation. Herein, the activation data can be entered manually into the settings of the user device or by scanning a code associated with the corresponding profile to be installed on the user device. The activation data can enable the server device to provide the necessary profile data to the user device enabling SIM related services on the user device.

The activation of a SIM can involve a series of steps that allow a mobile device to connect to a cellular network, preferably without the need for a physical SIM card, i.e. an eSIM. The first contact point for the mobile device during eSIM activation can relate to the installation of the eSIM profile. This can be achieved by scanning a code provided by the MNO and/or entering connection details manually into the device's settings. The code may comprise information for programming the eSIM with subscription details. Once the eSIM profile is installed, the mobile device may send data to the server device, e.g., an SM-DP+ server. Thereby, a unique identifier, e.g., a SM-DP+ address, can be used to allow the server device to recognize and authenticate the user device. During activation, the user device can communicate with the server device using the unique identifier. The server device can validate the user device's identity and authorize the creation of an eSIM profile, which may comprise essential information such as the phone number and MNO details. This profile can then be sent to the device, allowing it to connect to the mobile network. The final step can be the actual activation of the eSIM on the device. This can be confirmed by the user device successfully activating services of the MNO, e.g., register and/or affect data transfer in the mobile network.

During the initial transmission to the server device, the user device can send an activation request, i.e., a registration request, that may include several key data elements. The activation request can comprise a device identification, preferably including the IMEI (International Mobile Equipment Identity) or EID (eUICC Identifier), which can uniquely identify the user device. Further, the method can comprise confirming the profile data, e.g., the eSIM Profile. Herein, the user device can confirm the eSIM profile that needs to be installed. This can comprise referencing an ICCID (Integrated Circuit Card Identifier) of the profile.

This initial data exchange is crucial for the secure download and installation of the eSIM profile onto the device. It allows the SM-DP+ to authenticate the device and prepare the appropriate eSIM profile for subsequent download and activation. The process ensures that the eSIM profile is delivered securely and is specific to the device requesting it, preventing unauthorized use or duplication of the eSIM profile.

Receiving activation data by the server device can initiate a sequence of events to achieve an activation of the user device. Also, the network management device can be enabled to register the newly activated user device. Thereby, the network management device can be prepared to provide data and/or services to the user device after the user device completed the activation process with the server device. Receiving the activation data can trigger a communication process between the server device and the network management device to register the user device according to the activation data with the network management device.

Preferably, sending the notification can be performed by the server device in response to receiving the activation data. The server device may perform steps for providing profile data to the user device in response to receiving the activation data. For example, the server device can generate a corresponding eSIM profile or provide an eSIM profile to the user device. The profile data may enable the user device to connect to a mobile network and/or to enable subscription services relating to a mobile network on the user device.

The notification can trigger a registration process at the network management device. The registration process can comprise registering a new subscription, respectively a new subscriber, to a mobile network according to the profile data. Further, a new profile type according to the profile data can be registered at the network management device. A profile type can relate to a connection profile template void of personal data and/or user device specific data. The profile type can relate to a SIM type and/or SIM component type. Additionally, the profile type can relate to subscription details relating to connectivity options for accessing the mobile network.

The profile data can comprise at least part of the activation data. For example, the profile data can be an eSIM profile, i.e., a dataset comprising a combination of a file structure, data, and/or applications present on an eUICC. When enabled, a profile may allow access to a specific mobile network infrastructure.

The database entry request can be a request to receive an initial eSIM profile. Herein, the initial eSIM profile can already be an updated eSIM profile.

The notification may identify device or user specific data to the network management device. The notification can be a single data transfer and/or initiate a communication between the server device and the network management device. The profile data may extend the activation data set according to profile data, e.g., profile template data, stored at the server device. Thereto, the server device may generate a complete profile according to the received activation data and incorporating additional MNO provided data. The generated profile can be designed to effect an activation of a user device when received by the user device.

Sending of the notification may be prioritized by the server device to enable the network management device to react as soon as possible to the notification. The notification can signal to the network management device that a user device is to be activated by the server device. In particular, that the server device will provide, i.e. is providing, profile data to the user device.

Generating a profile entry according to the received profile data can relate to the network management device processing the profile data and to determine a profile type and/or to identify a unique subscriber according to the profile data. The profile entry can be a database entry in a database of actively managed user devices, respectively of actively managed subscribers. In other words, the network management device can register the user device, respectively the subscriber, such that further processing and data transfers to the user device can occur. Specifically, profile updates subsequent to the activation by the server device can be prepared. Thereto, the profile entry corresponding to the user device can be added to update campaigns, scheduled for individual updates, and/or monitored for future updates. Based on the profile entry, an update transfer can be assigned to and/or scheduled for the user device.

In general, the profile data can comprise information relating to a mobile device, a subscriber of a mobile network, an MNO, a mobile network, and/or a connection to the mobile network. The profile data can comprise data generally stored on a mobile device, preferably in an infrastructure or a device component relating to a connecting process to the mobile network. The device component can be a SIM card, e.g., an eSIM, a UICC, an eUICC, and/or an iUICC or any other future SIM type. Preferably, the profile data relates to a specific profile or parts of a profile to be stored on the SIM card. Thereby, the profile data can enable specific services on the mobile device.

The profile data can be eSIM profile data relating to at least one of the following:
- an eSIM profile for a user device, in particular an eUICC of the user device;
- an eSIM profile template for a user device or a plurality of user devices;
- eSIM profile modification instructions, comprising commands to modify an eSIM profile at the user device, in particular commands to be executed by the user device;
- eSIM application management instructions, comprising commands to modify an application of the user device, in particular an application executed or to be executed by the eUICC; and/or
- eSIM random access memory (RAM) related instructions, comprising commands to modify data in a RAM of the user device, in particular data in a RAM of the eUICC of the user device.

The profile data can be an eUICC information set (EIS) which can preferably comprise all eUICC related information (EID, ICCID, etc.) or a subset thereof.

The method can comprise providing profile data according to the activation data to the user device. Providing profile data can relate to providing profile data for downloading, actively sending profile data, initiating a download of profile data to the user device, in particular via a remotely issued download command, preferably a download command issued by the server device, initiating a download of profile data in response to polling a profile data provider, preferably the network management device, responding to a download campaign issued by the profile data provider, preferably the network management device, or any combination of the above.

The server device can be an eSIM repository server. Specifically, the server device can be implemented as a subscription manager data preparation device, i.e., as a SM-DP or as a SM-DP+. The server device can be configured to serve as a unique identifier for a remote server that facilitates the downloading and management of eSIM profiles. The server device can be a bridge enabling data exchange between a user device and a mobile network operator. The server device can be an eSIM-enabled device configured to enable downloads of profile data, e.g., profile data, and to manage profile data.

The server device can be configured to allocate and manage profile data. The server device can be configured to allocate eSIM profiles to subscribers. It can manage the lifecycle of each eSIM profile, including creating, storing, deleting, and/or updating the respective eSIM profile.

The server device can implement robust security measures to authenticate and authorize access to eSIM profiles, including the use of encryption, secure channels for communication, and compliance with industry-standard protocols. The server device can ensure compatibility with various mobile network operators (MNOs) and user devices, facilitating a seamless user experience, in particular across different networks and/or geographic regions.

The server device can be configured to enable remote provisioning and management of profile data. This can be an SM-DP feature. It allows MNOs to download, enable, disable, or delete profile data on a device, in particular without physical access.

The server device can be configured to customize profile data according to requirements of an MNO, including the provision of operator-specific applications and services.

The server device can be configured to dynamically swap profile data. This can be an SM-DP+ feature. This can achieve the advantage that subscribers can switch between different MNO profiles.

The server device can be configured to execute batch operations for handling multiple eSIM profiles, preferably to modify a plurality of eSIM profiles, i.e., eSIM database entries. This can achieve the advantage of improving efficiency for MNOs managing large numbers of subscribers. The server device can be configured to modify a plurality of eSIM database entries simultaneously.

The server device can be configured to incorporate security features, such as end-to-end encryption and secure routing of profile download requests, to protect against unauthorized access and tampering.

The server device can adhere to relevant regulatory requirements and industry standards, including those set by the GSMA for remote SIM provisioning.

The network management device can be configured to provide a user profile update to the user device. The user profile update can relate to an eSIM profile update comprising data and/or instructions corresponding to at least one of the following:
- modifying a set of files stored in the eUICC, e.g., replacing with an updated version, deleting an existing file and/or adding a new file;
- modifying parameters, e.g., adding parameters, removing parameters, changing values of existing parameters, in particular parameters stored in the eUICC and/or parameters available to the eUICC;
- providing a new eSIM profile to replace an existing eSIM profile; and
- providing an eSIM profile template to create a new eSIM profile according to the eSIM profile template in combination with data available from an existing eSIM profile.

The network management device can be a remote management and provisioning server, in particular for a mobile network. Specifically, the network management device can be configured as an Over-The-Air (OTA) server providing profile data, in particular eSIM profile data.

The network management device can be configured to transmit data and software updates to user devices such as smartphones, tablets, and embedded modules within Internet of Things (IoT) devices. Preferably, the data is transmitted wirelessly, in particular via a mobile network. The network management device can be configured to facilitate remote management and provisioning of eSIMs, enabling dynamic distribution and updating of eSIM profiles, in particular without the need for physical access to the device.

The network management device can be configured to manage profile data, specifically eSIM profiles. The network management device can be configured to remotely manage profile data, which may include downloading, installing, and/or updating profile data, i.e., eSIM profiles, on devices. This can ensure that users can seamlessly switch between network operators or update their service subscriptions without requiring a physical SIM card swap.

The network management device can be configured to deliver firmware and software updates over the air, allowing devices to stay updated with the latest features, security patches, and performance improvements. This includes updates to the eSIM's operating system and applications.

The network management device can be configured to remotely configure device settings, optimize network selection, and/or manage roaming preferences, ensuring optimal device performance and user experience.

The network management device can be configured to use encryption keys and/or authentication credentials to safeguard transmissions of profile data against unauthorized access and ensuring data integrity during eSIM profile updates.

The network management device can be configured to perform remote diagnostics and monitoring of devices. This can achieve the advantage of identifying and resolving issues related to eSIM functionality and connectivity. The network management device is an integral component of a mobile network telecommunications infrastructure, providing a secure and efficient means of managing eSIM profiles.

The network management device can provide profile data via a physical interface with the user device.

The network management device can comprise a cloud-based service configured to provide an API configured to provide an interface to an eSIM update process for user devices.

The term user device can, for example, be referred to as a user equipment (UE), a user terminal (UT), a wireless terminal, a mobile station (MS), an access terminal (AT), a terminal, a subscriber unit, a subscriber station (SS), a wireless device, a wireless communication device, a wireless transmission/reception unit (WTRU) or a moving node. Embodiments of a user device includes a cellular phone, a smart phone, a personal digital assistant (PDA), a wireless modem, a portable computer, a camera, a home appliance, or a media appliance.

The network management device can provide compatible profile data according to parameters of the user device, specifically of an eUICC. Transferring the profile data can also relate to the network management device sending the profile data to the server device and/or user device such that the transfer is initiated by the network management device.

The network management device can perform the transfer of the profile data according to a predetermined update process to update profile data, specifically an eSIM profile, of the user device. The server device can be configured to take the role of a user device in the predetermined update process such that the network management device provides the profile data to the server device as it would provide the profile data to the user device. For example, the predetermined update process can be a single eSIM profile update configured to update a single eSIM, an eSIM template update configured to update a plurality of eSIMs having a shared characteristic, or an update campaign configured to update all eSIM profiles of a specific MNO.

The network management device can be configured to manage and distribute updates to user devices maintaining a repository of software updates. The network management device can ensure compatibility with various device models, network protocols, and/or SIM types. For a single SIM update, the network management device may detect when a specific user device requires an update. This trigger can be based on factors such as device type, firmware version, user request, or user device request. In campaign scenarios, the network management device can initiate updates for a group of devices simultaneously. Before initiating an update, the network management device can verify the device's identity and ensures proper authorization. Authentication mechanisms may include digital certificates, secure tokens, and/or SIM-based authentication. Authorization checks may consider factors like subscription status, network policies, and/or user preferences. The network management device can authenticate and authorize the server device for receiving an update.

The network management device can select an appropriate delivery method. For example, SMS-based, preferably for single SIM updates. The network management device can send an SMS comprising an update package link. Additionally or alternatively, the network management device can send push notifications. Thereto, update campaigns can leverage push notifications to notify devices about available updates. Devices can retrieve the update package directly from the network management device, in particular via secure connections, like HTTPS.

Upon receiving the update request, the device, i.e., user device and/or server device, can contact the network management device. For single SIM updates, the device downloads the package via SMS or directly (e.g., TLS, HTTPS, etc.). Devices selected via the update campaign can follow the same process, preferably in parallel. The device may install the update package, ensuring backward compatibility and data integrity.

In SIM update campaigns, the network management device may orchestrate the entire update process by grouping devices based on predetermined criteria (e.g., region, device type), scheduling updates (e.g., to minimize network congestion and/or maximize device availability), and/or handling exceptions (e.g., devices offline during the update window). Herein, the server device may provide an interface compatible with the update process of the network management device. Thereto, the server device may receive and process an update like any other device in an update device group.

The network management device may track update transactions, in particular to determine a progress or success of the update. Preferably, the network management device is ready to provide any updates to the user device due to receiving the notification in advance. This provides the network management device with a time interval between the server device providing profile data to the user device for activation and the user device potentially contacting the network management device.

This achieves the advantage that the network management device can be prepared to communicate with the newly activated user device. The probability of the network management device missing an initial communication request and/or not having appropriate data ready to deliver to the user device upon receiving the initial communication request can be lowered substantially.

According to a further embodiment the method can comprise the step of provisioning, preferably by the network management device, additional profile data, such updated profile data or updated device data, preferably in response to receiving the notification.

Provisioning profile data can relate to providing and/or generating profile data for subsequent distribution to a user device. For example, a profile update can be generated and/or the user device, respectively its corresponding profile data at the network management device, can be integrated in an update process or update campaign. Thereto, the network management device may have access to additional data, in particular data provided by an MNO. Additionally or alternatively, the network management device may prepare an acknowledgement that the user device provided with the profile data via the server device is eligible to connect to or use services in the mobile network as defined in the profile data. Herein, the profile data may define a customizable set of functions available to the user device. The network management device may be configured to provide a custom update cycle for the user device according to the timing of the activation of the user device, respectively activation of a corresponding eSIM profile. The additional profile data can relate to an eSIM profile update, comprising updated, i.e., modified data entries, compared to the initially provided profile data. Additionally or alternatively, device data, specifically updated device data, can be provisioned. Herein, device data can relate to device specific data entries, in particular relating to the eSIM profile or eSIM module on the device. Updated device data can relate to the interaction of the (e)SIM profile with the device specific hardware executing functions and/or providing services according to the profile.

The device data can relate to a security update ensuring security and integrity of data transfers between the network management device and the eSIM module. Further, the device data can relate to business logic functions and services relating to distributing and managing the eSIM profile and/or associated services. The additional profile data can relate to carrier services such that with the additional profile data carrier services and settings can be updated. Also, the further profile data can relate to compliance management such that a profile at the user device may comply with industry standards and regulations.

Provisioning additional profile data can comprise preparing the additional profile data to be communicated to the user device, preferably an update of profile data and/or device data. In a further beneficial embodiment, the method can comprise the step of requesting, preferably by the network management device, further profile data from the server device and/or providing, preferably by the server device, the further profile data upon receiving the request for further profile data. Preferably, providing the further profile data can be effected before providing the profile data to the user device.

This can achieve the advantage that the network management device can query the server device when further data is required than received in the initial profile data communication. For example, the server device may provide identification data relating to the eSIM, user and/or user device and additionally may only provide a profile type. The profile type can be unknown to the network management device. Thereto, the network management device can request a profile specification relating to the unknown profile from the server device. In response, the server device may provide the profile specification to the network management device. Thereby, the server device can provision the network management device with required profile specifications, e.g., profile templates, profile types, profile expansions. Thus, the pre-provisioning the network management device with profile types can be omitted, reducing network traffic, increasing consistency between the server device and the network management device. Also, the network management device database can be reduced to only manage required profiles for active subscribers. Not all possible profile types or profile data combinations need to be managed by the network management device. Requesting additional profile data can be subsequent to analyzing the received profile data by the network management device and/or subsequent to receiving the notification by the network management device. The initial profile data transfer can be limited, e.g., to reduce network traffic. The network management device may only request further profile data when the indicated profile type is unknown to the network management device. Thereto, the initial profile data can be limited to a minimum of data entries required for the network management device to establish an entry for the user device and track the user device for further updates.

According to another embodiment, the method can comprise the step of providing, preferably by the server device, a profile according to the activation data, preferably to the user device, in particular after sending the notification. Thus, sending the notification can be effected prior to providing the profile data. This achieves the advantage that there can be a time interval for the network management device between receiving the notification and the user device activating according to the profile data received by the server device. In this time interval, the network management device may prepare for additional communication with the user device. The notification can be provided as soon as possible to inform the network management device of an activation of the user device being in progress. The timing of the activation process may be controlled by the server device to allow sufficient time for the network management device to assess received profile data, request additional profile data, confirm processing of the notification and/or confirm completing preparatory tasks for the user device. The profile can be profile data, e.g., a complete eSIM profile. Thereto, the profile can be based on a profile type or profile template. The server device may generate the profile by processing the received activation data according to a profile template, generating a profile that can be deployed to the user device, preferably an SIM module of the user device to enable mobile network functions.

In a further beneficial embodiment, the method can comprise the step of providing, preferably by the network management device, a confirmation relating to the generation of the profile entry. Providing the profile data can be effected in response to the confirmation. Providing the confirmation can further aid in establishing an efficient process and remove uncertainties and/or undetermined states. The network management device may query the server device to receive any necessary information relating to the profile to be activated. Specifically, the network management device can distinguish between a technical profile specification and personal profile data received within the profile data. Thereto a profile template can be established based on the technical profile specification. Once a profile template is present at the network management device the network management device may only require in indication to the profile type, i.e., profile template to use, and the personal profile data from the server device. This can substantially reduce network traffic.

According to a further embodiment, the method can comprise the step of providing an update request comprising information relating to a profile data update affecting the profile data at the user device. Providing the update request can comprise polling, preferably by the user device, the network management device for updated profile data, preferably according to an update interval. Additionally or alternatively, providing the update request can comprise sending, by the network management device, the update request for the profile data update to the user device.

In addition to the information relating to the profile data update affecting the profile data, the update request can comprise the additional profile data, in particular when providing the update request is performed by the network management device. The method can comprise the step of preparing the additional profile data to be communicated to the device such as an update of profile data and/or device data.

The method can comprise providing the further profile data to the user device. Providing the further profile data comprises polling, preferably by the user device, the network management device for the further profile data, preferably according to an update interval, and/or sending, by the network management device, the further profile data to the user device.

The user device can be configured to poll the network management device for a profile data update. This achieves the advantage that the user device can actively try to receive an update from the network management device. The user device can announce its presence, update capability, profile version, update requirements, and/or update request to the network management device. The network management device may confirm a version of the database entry, in particular to indicate that the profile at the user device is in sync or out of sync with the database entry version, a corresponding update or update sequence at the network management device. Polling the network management device can relate to querying the network management device if an update is available and/or a current update campaign is in progress for the corresponding eSIM profile at the user device. The network management device can be configured to provide an update notification to the user device in response to being queried by the user device and/or in response to receiving the notification from the server device. Subsequently, the described update process can follow. In other words, the notification from the server device may trigger an update process. The server device may hold providing a current database entry unit a confirmation is received that the network management device is ready to communicate with the user device.

The network management device may register the activated user device according to the profile data received from the server device. Polling for a profile data update may prompt the network management device to provide a corresponding update to the server device. A poll for the profile data can be initiated by a user device requesting a database entry from the server device. Configuring the server device to actively synchronize profile data to the network management device can increase the efficiency of the network management device as it may ideally only manage active subscribers.

According to a second aspect, the present invention relates to a server device for providing profile data to a user device. The server device can be configured to receive activation data relating to an activation request of a user device, and to send a notification to a network management device comprising profile data relating to the activation data. Additionally, the server device can be configured to provide profile data according to the activation data to the user device after sending the notification.

Generally, the process of supplying eSIM profiles to the server device can involve several steps to ensure secure and efficient management of eSIMs. An eSIM profile can be created directly by the MNO or by the server device according to instructions received by the MNO. The eSIM profile can be securely generated and encrypted to ensure its integrity. The server device can be assigned a unique identifier, e.g., an SM-DP(+) address.

The present invention establishes an efficient procedure for data provisioning and specifically updating or provisioning of the network management device by the server device, e.g., the SM-DP(+). An MNO may securely transmit eSIM profiles to the respective server devices and may provide updates to the eSIM profiles via the network management device, e.g., the OTA server. The SM-DP(+) servers store the eSIM profiles and ensure their availability for activation requests. The server device according to the invention as capable of providing stored or generated eSIM profiles to the network management device. The server device may employ a standardized interface to connect to the network management device. Additionally or alternatively, the server device may provide the profile data in a standardized format, e.g., as a CPS record. The profile data transmitted to the network management device, e.g., the CPS record, can relate to the security aspect of this process and may be used to ensure that the communication between the server device and the eSIM, respectively the user device, and/ or between the server device and the network management device is authenticated and/or encrypted. Thereby, the user's subscription information can be protected during the provisioning and management of eSIM profiles. Using a CPS record can be a security measure to safeguard the transmission of eSIM profiles and to maintain the integrity of the data contained within them.

The data structure of a CPS (Certificate Provisioning Service) record may include a plurality of key data elements essential for secure provisioning of the profile data. The profile data may comprise certificate Information including a public key certificate used to establish a secure connection between the server device and the network management device, authentication keys used to authenticate the server device to the network management device and vice versa, encryption keys to encrypt the profile data being sent to the network management device, ensuring that the eSIM profile is transmitted securely. The CPS record may comprise a profile package containing the actual eSIM profile data, to be transmitted on the network management device. The profile data may include subscriber information and/or operator credentials. Additionally or alternatively, the CPS record may comprise security domains defining access rights and privileges for different entities involved in the eSIM management process.

The CPS record can be configured to comply with a GSMA specification, e.g. a specification for (remote) SIM provisioning. This can achieve the advantage that interoperability and security standards are met.

Receiving the activation request can relate to a standardized procedure between the user device and the server device to activate a SIM, specifically an eSIM, on the user device. The server device can be pre-provisioned with profile data to supply to the mobile device Preferably, the server device can be configured to process the activation data and provide corresponding profile data, e.g., an eSIM profile, to the user device. When receiving the activation request the server device may contact the network management device to inform the network management device about the profile to be activated. The server device may control the activation process such that the profile data is provided to the user device within a predetermined time interval after receiving the activation request.

In an embodiment the server device can be configured to provide further profile data upon receiving a request for further profile data by the network management device. Preferably, providing further profile data can be effected before providing the profile data, i.e., providing the profile data to the user device.

A profile data entry at the server device may be an eSIM profile and thereto suitable to be directly supplied to the user device. The server device can be configured to generate a database entry to be supplied to the user device according to the stored data. In other words, the server device may not store the requested eSIM profile directly but may store the initial eSIM profile and any subsequent update data pertaining to this eSIM profile. Upon receiving a request to provide the eSIM profile, the server device may generate the eSIM profile.

A requested eSIM profile may not be directly stored in the database of the server device. Instead, the database may comprise profile data and the server device can be configured to generate the eSIM profile according to the profile data when the request for the eSIM profile is received. The eSIM profile can be generated based on initial profile data, and preferably also updated profile data or a sequence of updates to the profile data. The generated eSIM profile may be stored as the database entry and provided to the user device.

The network management device can be configured to provide an interface to the server device corresponding to a user device interface such that a profile data provided by the server device may conform to the user device but is also provided to the network management device. Thereby, the network management device can provide a mechanism to receive eSIM profiles. The interaction between server device and network management device can result in an active entry relating to the received profile data, preferably without any manual intervention. This process can adhere to a standardized interface.

According to a third aspect, the present invention relates to a network management device for providing profile data to a user device. The network management device can be configured to receive a notification comprising profile data relating to activation data of a user device from a server device, and/or to generate a profile entry according to the received profile data. Advantageously, the network management device is not only notified by the server device that an activation request is received and/or that the server device may provide profile data to the user device, but the network management device may receive the profile data relating to this activation process. The server device can be configured to provide the profile data and notification as separate instances. For example, the server device may provide a notification at the first instance of communication with the user device. The profile data can be provided to the network management device subsequent to the notification.

The server device can be configured to provide the notification using a predefined format and/or communication protocol, e.g., according to eSIM link. The network management device can be configured to request profile data from the server device upon receiving the notification. The server device can be configured to minimize the data transfer volume between the server device and the network management device. Herein, the notification can be corresponding data flag in a required data transmission. The required transmission can be amended to include the profile data.

According to a beneficial embodiment, the network management device can be configured to request further profile data from the server device in response to receiving the notification, and/or to generate the profile entry according to the further profile data.

The network management device can be configured to determine required data to generate a profile entry and to query the server device for profile data and/or further profile data. In particular when generating a profile entry may fail due to insufficient data. For example, the server device may initially only provide a profile type designator and identification data relating to the activation request. If the profile type is not previously known to the network management device, generating the profile entry may fail. Since, the further profile data is present at the server device as it forms an integral part of the profile to be provided to the user device.

The server device may activate a plurality of user device with the same profile type or profile template. Consequently, the notification to the network management device may comprise an indication of the profile type or profile template used. In case the indicated profile type or profile template has not previously been received by the network management device, the network management device can be configured to request further profile data specifying technical parameters of the profile type or profile template.

According to a further embodiment, the network management device can be configured to generate a profile template according to the profile data.

This achieves the advantage that in subsequent activation related communications with the server device the network management device may only receive profile data from the server device completing a corresponding indicated profile type or profile template. The network management device can be configured to combine the profile template with the profile data received from the server device to generate an individualized entry for the corresponding user device to be activated, respectively which has been activated. The server device can be configured to provision the network management device with profile data, preferably all required profile data. This can eliminate the need for pre-provisioning the network management device with profile data or at least reduce the need to immediately provide new profile data to the network management device. Herein, the server device can represent the instance to be provided with profile data, e.g., from an external source, preferably by the MNO.

The database of profiles to be managed by the network management device can be incrementally build with each activation, in particular with each activation of a new profile type or profile template. A profile data updates can be provided to the server device and may not be provided to the network management device. The network management device may only start managing a new profile type or template according to the profile data update once at least one user device request activation corresponding to the new profile type or profile template and a corresponding notification is received by the network management device. Preferably, the notification originates from the server device.

In a further embodiment, the network management device can be configured to prepare an update procedure for a communication between the network management device and a user device. Preparing an update procedure can relate to determining if there is a profile data update available at the network management device that correspond to the profile type, profile template, and/or a specific element of the profile data. The network management device may mark the corresponding profile entry for an update, such that the update process can be initialized upon communication contact with the corresponding user device.

The network management device can be configured to establish communication, in particular a first or initializing communication, with the user device, in particular in response to receiving the notification. Thereto, the network management device can use the information of the user device being activated, being recently activated or being about to be activated. The network management device can be configured to generate a communication for the user device to directly initiate a profile update when a connection to the user device can be established or is established.

According to a fourth aspect, the present invention relates to a computer program product comprising a computer-readable medium bearing instructions executable by a network device capable of participating in a communication network. The instructions, when executed by the network device, can cause the network device to perform steps of the method according to any one of the embodiments of the method according to the first aspect.

According to a fourth aspect, the present invention relates to a computer-readable data carrier, comprising a non-transitory computer-readable medium. The medium can have stored there on a computer program according to any one of the embodiments of the computer program product according to the fourth aspect. The computer program, when executed by a network device, can causes the network device to perform the method according to anyone of the embodiments of the method according to the first aspect.

According to a fourth aspect, the present invention relates to a mobile network system, comprising a server device according to anyone of the embodiments of the server device according to the second aspect, a network management device according to any one of the embodiments of the network management device according to the third aspect and a plurality of user devices. The network management device can be configured to receive profile data from the server device and/or provide profile data updates to user device activated by the server device of the plurality of user devices. The network management device can be configured to prepare for an update procedure with an activated user device according to the received profile data corresponding to the activated user device in response to receiving the profile data from the server device.

### BRIEF DESCRIPTION OF THE DRAWINGS

Reference will now be made to the accompanying figures, in which
FIG. 1 shows a schematic representation of the method according to an embodiment of the present invention; and
FIG. 2 shows a schematic representation of the system according to an embodiment of the present invention.

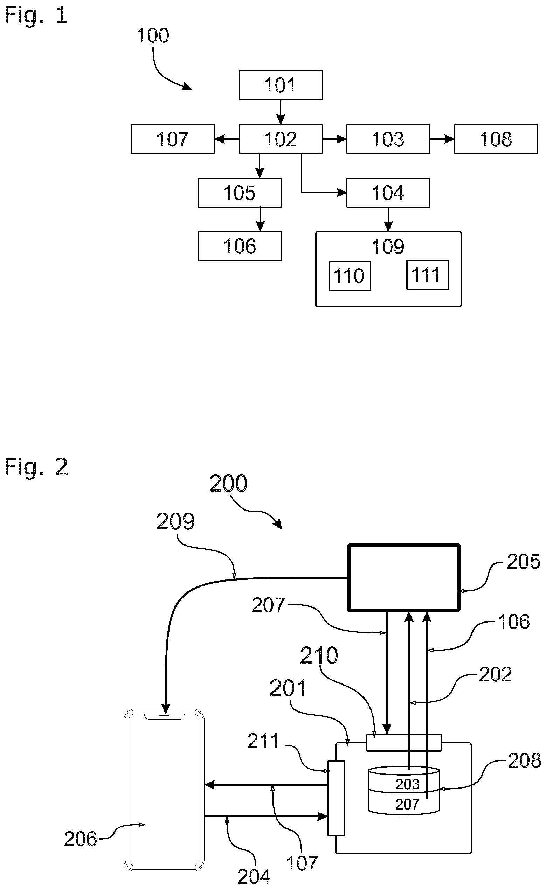

FIG. 1 shows a schematic representation of the method 100 for providing profile data to a network management device according to an embodiment of the present invention.

Specifically, profile data, such as an eSIM profile, can be provided involving a server device, a network management device, and a user device. In a first set of steps the method relates to a user device triggered activation of an eSIM profile at the user device. A first contact point can be the server device.

Throughout this process, logical connections and dependencies are crucial. For instance, the provisioning of updates can be dependent on the initial receipt of the activation data. Similarly, the confirmation from the network management device can be a prerequisite for the server device to provide the final profile data to the user device.

In the context of communication between the server device and the network management device, the server device preferably acts as a Digital Profile (DP+) system, managing the eSIM profiles, while the network management device, acts as an OTA system overseeing the network management and the delivery of profile updates. The OTA system may ensure that the user device is always equipped with the latest profile data, maintaining seamless connectivity and service provision.

The described process can be triggered by an eSIM initialization, e.g., entering connection information into the mobile device, which can result in receiving 101 activation data relating to requesting an activation by the server device from the user device and in response notifying the network management device about the corresponding download of a profile to the user device. Sending 102 the notification can be effected by the server device. Receiving the notification sent by the server device, the network management device can be aware of the profile type and device identification and/or user identification of the corresponding activation request. Thereto any measure to increase efficiency of a subsequent communication between the network management device and the user device can be effected. The mobile network infrastructure can be configured to enable a secure communication channel between the server device and the network management device suitable to transfer the sensitive profile data.

In response to receiving the notification a profile entry generating 103 of the profile entry can be performed at the network management device or an associated database. The profile entry can relate to the user device as an entity to be managed. Updates managed by the network management device can be updates to the initial profile data at the user device received by the server device.

Preferably, provisioning 104 additional profile data can be performed upon receiving the notification. The network management device 205 provisions additional profile data, such as profile update. Directly providing the profile update can increase the chance that the device may directly complete the update process after completing the activation by the server device.

Consequently, the number of pending updates can be reduced. Eventually, the completion rate of update batches, update campaigns can be increased.

Requesting 105 further profile data by the network management device 205 enables the network management device complete profile information, in particular complete a profile entry of a previously unknown profile type or template. Requesting further profile data can be performed using the same interface or communication as used for the initial notification.

In response to the request, providing 106 further profile data can be performed.: The server device may provide the further profile data. For example, the server device may initially provide a profile identifier and subscription, user device and/or user specific data as the profile data with the notification. Preferably, the server device provides a minimal dataset necessary to identify the eSIM profile to be activated.

Optionally, the step of providing 108 a confirmation can be performed. Thereto the network management device can provide the confirmation. The conformation can be an acknowledgement of receiving the profile data and/or of processing the profile data, e.g., the network management device has registered the profile type and/or the new user for management according to the services associated with the profile, e.g., the eSIM profile. Depending on the timing of events, the providing 107 of the profile data to the user device can be effected in response to this confirmation. The timing can relate to a time interval between sending the activation request by the user device and receiving profile data, i.e., the eSIM profile, by the user device from the server device. Herein a timing threshold can be implemented to wait for the confirmation from the network management device. For example, the server device may provide the profile data to the user device also without receiving confirmation from the server device when a time interval threshold is exceeded.

Providing 109 an update request can involves either the user device polling 110 the network management device for updated profile data, preferably according to an update interval, or the network management device or sending 111 the update request for the profile data update to the user device. Typically, an update process of the user device can be initiated by the network management device. However, the user device may request an update, e.g., when the profile data received by the server device enables basic mobile network service, but additional data from the network management device is required for further services.

This method ensures efficient communication between the DP+ (server device) and the OTA system, enabling seamless provisioning and managing eSIM profiles with increased consistency and synchronized data sets between devices.

FIG. 2 shows a schematic representation of the system 200 according to an embodiment of the present invention, specifically relating to the server device 201 configuration and interaction with the network management device 205 and the user device 206.

The figure illustrates the server device 201 in communication with the network management device 205. The server device 201 is depicted as being capable of performing several functions: The server device 201 can provide a notification 202 to the network management device 205 corresponding to an activation request by the user device 206, ensuring that the network management device 205 is aware of an imminent activation of the user device 206.

The server device 201 can provide an interface 210 to the network management device 205 to handle and receive profile data, respectively corresponding requests. enabling the network management device 205 to generate a profile entry based on the received profile data.

By means of the interface 210, the server device 201 can ensure that any profile data intended for the user device 206, is also received by the network management device 205.

The server device 201, specifically the interface 210 can be equipped to connect to a remote file management (RFM) interface, preferably of the network management device 205. The profile data 203 includes, but is not limited to, eSIM profile modification instructions, eSIM application management instructions, and eSIM configuration instructions. The network management device 205 can utilize this data to create or modify a corresponding profile entry as needed. This configuration enables the server device 201 to act as an intermediary, ensuring that the user device 206 receives accurate profile data, while also providing the flexibility to manage eSIM profiles effectively to the network management device 205. Specifically, a secure channel infrastructure established between the server device 201 and the network management device 205 can be used to transfer profile data to the network management device 205.

Sending 102 the notification 202 can be essential to managing profiles at the network management device 205. The server device 201 can be configured to receive profile data, e.g. from an external source,

The server device 201 can provide further profile data 207 upon receiving a request for the further profile data 207 by the network management device 205, preferably before providing the profile data, e.g., the profile 208 to the user device 206. The profile 208 can comprise complete profile data 204 for the user device 206 to enable services relating to the mobile communication network.

The server device can comprise a device interface 211 configured to establish a secure connection to a user device 206. Preferably, the server device 201 can rely on its established features relating to its function as an SM-DP(+).

Upon receiving the activation request, i.e., activation data 204 from the user device 206, the server device 201 may contact the network management device 205 with the notification 202 relating to the activation data 204. If an update is available, the network management device 205 may provide a profile update subsequent to the activation of the user device 206 via the server device 201.

The network management device 205 can generate a profile entry according to the received profile data. The network management device 205 may receive initial profile data 203 comprising a minimal subset of profile data or a complete profile 208 comprising the initial profile data 203 and further profile data 207. Splitting the profile data into two transfers can reduce network traffic as the network management device 205 may not require the further profile data 207 to generate the profile entry.

The network management device 205 can request the further profile data 207 from the server device 201 in response to receiving the notification 202 with the initial profile data 203. Additionally or alternatively, the server device may control when or if the further profile data 207 is provided to the network management device 205.

The network management device may generate a profile template according to the profile data, e.g., the further profile data 207. Thereto, transferring the information comprised in the further profile 207 in subsequent profile data transfers to the network management device 205 can be avoided. In other words, once the network management device 205 is aware of a specific profile type, respectively profile template, only the initial profile data 204 corresponding to a further activation according to that previously received profile and/or created profile template may be sufficient to generate the profile entry.

In the context of a profile update, the network management device 205 can prepare an update procedure for an initial communication between the network management device 205 and a user device 206. Herein additional profile data 209, specifically updated profile data, can be supplied to the user device 206.

## Claims

1. A method (100) for providing profile data, such as an eSIM profile, comprising the steps of
receiving (101), by a server device (201), activation data (204) relating to an activation request of a user device (206);
sending (102), by the server device (201), a notification (202) to a network management device (205) comprising profile data (203) relating to the activation data;
generating (103), by the network management device (205), a profile entry according to the received profile data (203).

2. The method (100) according to claim 1, comprising the step of
provisioning (104), by the network management device (205), additional profile data (209), such as updated profile data or updated device data, in response to receiving the notification (202).

3. The method (100) according to any one of the preceding claims, comprising the step of
requesting (105), by the network management device (205), further profile data (207) from the server device (201); and
providing (106), by the server device (203), the further profile data (207) upon receiving the request for further profile data (207).

4. The method (100) according to any one of the preceding claims, comprising the step of
providing (107), by the server device (201), a profile (208) according to the activation data to the user device (206),
wherein sending (102) the notification (202) is effected prior to providing (107) the profile data (203).

5. The method (100) according to claim 3, comprising the step of
providing (108), by the network management device, a confirmation (212) relating to the generation of the profile entry, and
wherein providing the profile data (203) is effected in response to the confirmation (212).

6. The method (100) according to any one of the preceding claims, comprising the step of
providing (109) an update request comprising information relating to a profile data update (209) affecting the profile data at the user device (206);
wherein providing (109) the update request comprises
polling (110), by the user device (201), the network management device (205) for updated profile data, preferably according to an update interval, or
sending (111), by the network management device (205), the update request for the profile data update to the user device (206).

7. A server device (201) for providing profile data (203) to a user device (206), configured to:
receive activation data (204) relating to an activation request of a user device (206);
send a notification (204) to a network management device (205) comprising profile data (203) relating to the activation data (204); and
provide a profile (208) according to the activation data (204) to the user device (206) after sending the notification (202).

8. The server device (201) according to claim 7, configured to:
provide further profile data (207) upon receiving a request for further profile data (207) by the network management device (205).

9. A network management device (205) for providing additional profile data (209) to a user device (206), configured to:
receive a notification (202) comprising profile data (203) relating to activation data (204) of a user device (206) from a server device (201);
generate a profile entry according to the received profile data (203).

10. The network management device (205) according to claim 9, configured to:
request further profile data (207) from the server device (201) in response to receiving the notification (202); and
generate the profile entry according to the further profile data (207).

11. The network management device (205) according to any one of claim 9 or 10, configured to generate a profile template according to the profile data (203).

12. The network management device (205) according to any one of claim 9 to 11, configured to prepare an update procedure for a communication between the network management device (205) and the user device (206).

13. A computer program product, comprising:
computer-readable medium bearing instructions executable by a network device capable of participating in a communication network,
wherein the instructions, when executed by the network device, cause the network device to perform steps of the method (100) according to any one of claims 1 to 6.

14. A computer-readable data carrier, comprising:
a non-transitory computer-readable medium;
wherein the medium has stored there on a computer program according to claim 13;
wherein the computer program, when executed by a network device, causes the network device to perform the method (100) according to any one of claims 1 to 6.

15. A mobile network system (200), comprising
a server device (201) according to any one of claims 7 or 8,
a network management device (205) according to any one of claims 9 to 12, and
a plurality of user devices,
wherein the network management device (205) is configured to receive profile data (203) from the server device (201) and provide additional profile data (209) to a user device (206) activated by the server device (201) of the plurality of user devices,
wherein the network management device (205) is configured to prepare for an update procedure with an activated user device (206, activated according to the received activation data (204), in response to receiving the profile data (203) from the server device (201).

## Amended claims

### Amended claims in accordance with Rule 137(2) EPC.

1. A method (100) for providing profile data, such as an embedded subscriber identity module profile (208), comprising the steps of
receiving (101), by a server device (201), activation data (204) relating to an activation request of a user device (206);
sending (102), by the server device (201), a notification (202) to a network management device (205) comprising profile data (203) relating to the activation data (204), wherein the profile data relates to parts of a profile to be stored on a subscriber identity module card;
generating (103), by the network management device (205), a profile entry according to the received profile data (203), wherein the profile entry is a database entry in a database of actively managed user devices (206) or of actively managed subscribers, and
providing (107), by the server device (201), a profile (208) according to the activation data to the user device (206).

2. The method (100) according to claim 1, comprising the step of
provisioning (104), by the network management device (205), additional profile data (209), such as updated profile data or updated device data, in response to receiving the notification (202).

3. The method (100) according to any one of the preceding claims, comprising the step of
requesting (105), by the network management device (205), further profile data (207) from the server device (201); and
providing (106), by the server device (201), the further profile data (207) upon receiving the request for further profile data (207).

4. The method (100) according to any one of the preceding claims, wherein sending (102) the notification (202) is effected prior to providing (107) the profile (208).

5. The method (100) according to claim 3, comprising the step of
providing (108), by the network management device, a confirmation (212) relating to the generation of the profile entry, and
wherein providing the profile (208) is effected in response to the confirmation (212).

6. The method (100) according to any one of the preceding claims, comprising the step of
providing (109) an update request comprising information relating to a profile data update (209) affecting the profile data at the user device (206);
wherein providing (109) the update request comprises
polling (110), by the user device (201), the network management device (205) for updated profile data, preferably according to an update interval, or
sending (111), by the network management device (205), the update request for the profile data update to the user device (206).

7. A server device (201) for providing profile data (203) to a user device (206), configured to: receive activation data (204) relating to an activation request of a user device (206);
send a notification (204) to a network management device (205) comprising profile data (203) relating to the activation data (204), wherein the profile data relates to parts of a profile to be stored on a subscriber identity module card;
provide a profile (208) according to the activation data (204) to the user device (206) after sending the notification (202), and
provide further profile data (207) upon receiving a request for further profile data (207) by the network management device (205).

8. A network management device (205) for providing additional profile data (209) to a user device (206), configured to:
receive a notification (202) comprising profile data (203) relating to activation data (204) of a user device (206) from a server device (201), wherein the profile data (203) relates to parts of a profile (208) to be stored on a subscriber identity module card;
generate a profile entry according to the received profile data (203); and
provision (104) additional profile data, such as an updated profile, to the user device (206).

9. The network management device (205) according to claim 8, configured to:
request further profile data (207) from the server device (201) in response to receiving the notification (202); and
generate the profile entry according to the further profile data (207).

10. The network management device (205) according to any one of claim 8 or 9, configured to generate a profile template according to the profile data (203).

11. The network management device (205) according to any one of claim 8 to 10, configured to prepare an update procedure for a communication between the network management device (205) and the user device (206)
wherein preparing the update procedure relates to determining if there is a profile data update available at the network management device (205) that corresponds to the profile type of the profile data.

12. A computer program product, comprising:
computer-readable medium bearing instructions executable by a network device capable of participating in a communication network,
wherein the instructions, when executed by the network device, cause the network device to perform steps of the method (100) according to any one of claims 1 to 6.

13. A computer-readable data carrier, comprising:
a non-transitory computer-readable medium;
wherein the medium has stored there on a computer program according to claim 12; wherein the computer program, when executed by a network device, causes the network device to perform the method (100) according to any one of claims 1 to 6.

14. A mobile network system (200), comprising
a server device (201) according to claim 7,
a network management device (205) according to any one of claims 8 to 11, and
a plurality of user devices,
wherein the server device (201) is configured to activate a plurality of user device with the same profile type;
wherein the network management device (205) is configured to register an activated user device (206) according to the profile data received from the server device (201);
wherein the network management device (205) is configured to receive profile data (203) from the server device (201) and provide additional profile data (209) to a user device (206) activated by the server device (201) of the plurality of user devices,
wherein the network management device (205) is configured to prepare the update procedure with an activated user device (206), activated according to the received activation data (204), in response to receiving the profile data (203) from the server device (201).
